# EUROPÄISCHE PATENTANMELDUNG

(11) **EP 2 980 447 A1**
(43) Veröffentlichungstag der Anmeldung: **03.02.2016**
(21) Anmeldenummer: 14178715.0
(22) Anmeldetag: 28.07.2014
(51) Int. Cl.: F16H 1/32

(54) **Exzentergetriebe oder Exzenterstufe und Antrieb mit Exzentergetriebe oder Exzenterstufe**

(71) Anmelder: Siemens Aktiengesellschaft, 80333 München (DE)
(72) Erfinder: Schlegel, Eugen, 46117 Oberhausen (DE)

(57) **Zusammenfassung**

Die Erfindung ist ein Exzentergetriebe (10) mit einer Antriebswelle (12), einer mit der Antriebswelle (12) drehfest verbundenen Exzenterscheibe (14), einem relativ zur Exzenterscheibe (14) drehbaren Ritzel (16) und einem äußeren, drehbar gelagerten Hohlrad (18), wobei das Ritzel (16) je nach Rotationslage der Antriebswelle (12) und der Exzenterscheibe (14) abschnittsweise in das Hohlrad (18) eingreift und mit Mitteln (24) zur Hemmung einer Rotationsbewegung des Ritzels (16).

## Beschreibung

Die Erfindung betrifft ein Exzentergetriebe oder eine Exzenterstufe und im Weiteren einen Antrieb mit einem Exzentergetriebe oder einer Exzenterstufe. Exzentergetriebe sind an sich bekannt und dienen dazu, eine hohe Drehzahl auf einer Eingangsseite in eine niedrige Drehzahl auf einer Abtriebsseite bei beinahe gleicher Leistung (Wirkungsgrad) zu wandeln.

Bekannte Exzentergetriebe haben vor allem den Nachteil hoher dynamischer Kräfte aufgrund der exzentrisch bewegten Bauteile sowie einer aufgrund der Bauweise und der Art und Anzahl der benötigten Bauteile begrenzten übertragbaren Leistung.

Eine Aufgabe der Erfindung besteht darin, ein weitere Ausführungsform eines Exzentergetriebes/einer Exzenterstufe anzugeben, insbesondere eine Ausführungsform, bei der solche dynamischen Kräfte vermieden oder zumindest deren Auswirkungen reduziert sind.

Diese Aufgabe wird erfindungsgemäß mittels eines Exzentergetriebes/einer Exzenterstufe - im Folgenden zusammenfassend als Exzentergetriebe bezeichnet - mit den Merkmalen des Anspruchs 1 gelöst. Dazu ist bei einem Exzentergetriebe mit einer Antriebswelle, einer mit der Antriebswelle drehfest verbundenen Exzenterscheibe, einem Ritzel und einer relativ zum Ritzel drehbaren Exzenterscheibe sowie einem äußeren, drehbar gelagerten Hohlrad vorgesehen, dass das Ritzel je nach Rotationslage der Antriebswelle und der Exzenterscheibe abschnittsweise in das Hohlrad eingreift und dass das Exzentergetriebe Mittel zur Hemmung einer Rotationsbewegung des Ritzels umfasst.

Aufgrund der Mittel zur Hemmung der Rotationsbewegung des Ritzels wird die Drehung der Antriebswelle und der mit der Antriebswelle rotierenden Exzenterscheibe auf das um seine Mittel- und Schwereachse drehbare Hohlrad übertragen. Das Drehmoment kann also - anders als bei bisherigen Exzentergetrieben - an einem regelmäßig um die Mittelachse rotierenden und nicht mit einer Unwucht belasteten Teil des Exzentergetriebes abgenommen werden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Der hier vorgeschlagene Ansatz erfordert eine Drehbarkeit der Exzenterscheibe relativ zum Ritzel und bei einer Ausführungsform des Exzentergetriebes ist das Ritzel mittels einer entsprechenden Lagerung, insbesondere einer Gleit-, Kugel- oder einer Wälzlagerung, zwischen einer Außenumfangsfläche der Exzenterscheibe und einer inneren Umfangsfläche des Ritzels relativ zur Exzenterscheibe drehbar gelagert. Dies stellt eine vergleichsweise einfache und wartungsarme Möglichkeit dar, mittels derer sich die Drehbarkeit der Exzenterscheibe relativ zum Ritzel erreichen lässt.

Bei einer Ausführungsform des Exzentergetriebes fungiert als Mittel zur Hemmung einer Rotationsbewegung des Ritzels um seine eigene Achse eine einseitig mit dem Ritzel verbundene Kupplung, die auf einer dem Ritzel gegenüberliegenden Seite drehfest gelagert ist. Indem das Ritzel in seiner Drehung gehemmt ist, also in seiner Rotationslage fixiert oder zumindest im Wesentlichen fixiert ist, wird die Rotation der Antriebswelle über eine mit der resultierenden Rotationsbewegung der Exzenterscheibe verursachte Pendelbewegung des Ritzels im Hohlrad auf das Hohlrad übertragen und im Ergebnis resultiert eine Rotation des als Abtriebsseite des Exzentergetriebes fungierenden Hohlrads.

Zur Verbindung der Kupplung mit dem Ritzel kommen eine Verzahnung an der Kupplung und eine korrespondierende Gegenverzahnung am Ritzel in Betracht, wobei die Kupplungsverzahnung in die Gegenverzahnung am Ritzel eingreift. Eine solche Verbindung zwischen Kupplung und Ritzel erlaubt die Übertragung großer Drehmomente mittels des Exzentergetriebes. Zur drehfesten Fixierung der Kupplung auf der dem Ritzel gegenüberliegenden Seite kommt ebenfalls eine Verzahnung an der Kupplung in Betracht, die in eine drehfeste, korrespondierende Gegenverzahnung eingreift. Die Drehfestigkeit der Gegenverzahnung wird dabei zum Beispiel erreicht, indem die Gegenverzahnung in einem das Exzentergetriebe umgebenden Getriebegehäuse gebildet ist oder im Inneren eines solchen Getriebegehäuses in sonst geeigneter Art und Weise angebracht ist.

Bei einer Ausführungsform des Exzentergetriebes, bei der die Hemmung der Rotationsbewegung des Ritzels mittels einer verzahnten Kupplung und entsprechenden Gegenverzahnungen gewährleistet wird, ist vorgesehen, dass die Kupplung und die Verzahnung der Kupplung sowie die Gegenverzahnungen so ausgeführt sind, dass alle Zähne der Verzahnung der Kupplung gleichzeitig mit den Zähnen einer jeweiligen Gegenverzahnung im Eingriff sind. Dies gewährleistet eine höchstmögliche Drehmomentübertragung. Dies ist ein wichtiger Unterschied zu einem Exzentergetriebe in Form eines Zykloidgetriebes, bei dem stets nur einzelne fingerartige Mitnahmeelemente drehmomentübertragend mit dem dortigen Exzenterrad in Verbindung sind.

Bei einer weiteren Ausführungsform des Exzentergetriebes weist die Verzahnung der Kupplung ballige Zähne auf. Dies ist eine vergleichsweise einfache Möglichkeit, mit der sich gewährleisten lässt, dass alle Zähne der Verzahnung der Kupplung gleichzeitig mit den Zähnen einer jeweiligen Gegenverzahnung im Eingriff sind. Die Zähne der Gegenverzahnung sind dabei mit geraden Zahnflanken ausgeführt, auf denen die balligen Zähne gewissermaßen abrollen. Im Sinne einer kinematischen Umkehr können die balligen Zähne auch der Gegenverzahnung und die Zähne mit den geraden Zahnflanken der Kupplungsverzahnung zugeordnet sein.

Bei einer nochmals weiteren Ausführungsform eines solchen Exzentergetriebes sind die Zähne der Gegenverzahnung und/oder die Zähne der Gegenverzahnung auf der dem Ritzel gegenüberliegenden Seite länger als eine entlang der Längserstreckung der Kupplung gemessene Länge der balligen Zähne der Verzahnung. Dies gewährleistet, dass die Verzahnung der Kupplung mit der jeweiligen Gegenverzahnung auch bei einer beim Betrieb des Exzentergetriebes resultierenden Bewegung der Kupplung nicht außer Eingriff kommt und entsprechend alle Zähne zur Übertragung des Drehmoments wirksam sind.

Bei einer besonderen Ausführungsform des Exzentergetriebes weist die Exzenterscheibe Mittel zum Beseitigen oder zumindest Verringern einer aufgrund der Exzentrizität der Exzenterscheibe resultierenden Unwucht auf. Als Beispiele für derartige Mittel sind Bohrungen, die zu einer lokalen Gewichtsreduktion führen, und/oder Gewichte, die zu einer lokalen Gewichtserhöhung führen, zu nennen. Mittels einer geeigneten Positionierung solcher Mittel gelingt eine Verschiebung einer Schwereachse der Exzenterscheibe hin zur Drehachse der Antriebswelle. Bei einer optimalen Positionierung solcher Mittel fällt die Schwereachse der Exzenterscheibe, insbesondere eine Schwereachse der Exzenterscheibe und aller damit verbundenen Anbauteile, mit der Drehachse der Antriebswelle zusammen. Im Ergebnis ist eine normalerweise aufgrund der Exzentrizität der Exzenterscheibe und/oder der Exzenterscheibe und aller damit verbundenen Anbauteile resultierende Unwucht beseitigt oder zumindest im Wesentlichen beseitigt. Die Exzenterscheibe, welche das Ritzel sowie sämtliche Anbauteile, wie zum Beispiel einen Kupplungsring mit einer Innenverzahnung zur Ankopplung der Kupplung, mit einem Versatz um die Mitte des Hohlrads in Bewegung versetzt, erhält dabei eine geometrische Form, bei der der Schwerpunkt aller um die Mittelachse des Hohlrads rotierender Bauteile im Wesentlichen oder sogar genau auf der Mittelachse des Hohlrads und der Mittelachse der Antriebswelle liegt. Dies führt zu einer deutlich verbesserten Laufruhe des Exzentergetriebes und damit auch zu einer deutlich verbesserten Haltbarkeit und verringerten Wartungsanfälligkeit des Exzentergetriebes. Zudem werden Fundamente oder dergleichen, auf denen ein solches Getriebe zum Beispiel bei Schwerlastanwendungen wie Zementmühlen oder dergleichen angebracht ist, zumindest nicht durch oszillierende Kräfte aufgrund von Unwuchten im Getriebe belastet. Auch dadurch ergibt sich der Vorteil einer verbesserten Haltbarkeit und verringerten Wartungsanfälligkeit einer zumindest ein derartiges Exzentergetriebe umfassenden Anlage oder Einrichtung.

Bei einer weiteren besonderen Ausführungsform des Exzentergetriebes fungiert als Antriebswelle ein Rotor eines Elektromotors, wobei die Exzenterscheibe drehfest mit dem Rotor verbunden ist. Dies ist eine von grundsätzlich mehreren Möglichkeiten, einen Elektromotor und ein Exzentergetriebe der hier vorgeschlagenen Art zu einer Einheit zusammenzufassen.

Ein Exzentergetriebe der hier und im Folgenden beschriebenen Art lässt sich mit weiteren, gleichartigen Exzentergetrieben oder auch anderen (herkömmlichen) Getrieben kombinieren, um eine gewünschte Übersetzung und/oder ein gewünschtes Drehmoment zu erreichen.

Insgesamt ist die Erfindung damit auch ein Antrieb oder eine Arbeitsmaschine mit zumindest einem Exzentergetriebe der hier und im Folgenden beschriebenen Art. Als spezielle Anwendungsmöglichkeit ist zumindest beispielhaft eine als Zementmühle fungierende Vertikal- oder Rohrmühle zu nennen. Das Exzentergetriebe ist in solchen Mühlen als Bestandteil des Antriebsstrangs mittelbar oder unmittelbar zum Antrieb des Mahltellers vorgesehen. Die bewegten Massen sind bei solchen Mühlen so groß, dass bisherige Exzentergetriebe aufgrund der dort auftretenden dynamischen Anregungen nicht verwendbar sind. Bei einem Antrieb des Mahltellers mittels eines Exzentergetriebes der hier vorgeschlagenen Art mit ausgewuchteter, insbesondere optimal ausgewuchteter Exzenterscheibe werden solche dynamischen Anregungen zumindest weitestgehend vermieden bzw. vollständig vermieden. Der Mahlvorgang wird auf diese Weise vergleichmäßigt und aufgrund der Vermeidung der bisherigen hohen dynamischen Belastungen kann mit einem weitgehend störungsfreien Betrieb, zumindest einem störungsfreien Betrieb während einer relativ zur bisherigen Laufdauer längeren Laufdauer gerechnet werden.

Der Vorteil der Erfindung und ihrer Ausgestaltungen besteht damit insbesondere darin, dass ein Exzentergetriebe mit einem sehr hohen Untersetzungsverhältnis (im Verhältnis zur Antriebsdrehzahl deutlich geringere Abtriebsdrehzahl) und mit einer geringen Bauteilanzahl angegeben wird, wobei eine Ausführung des Exzentergetriebes möglich ist, die dynamische Anregungen aufgrund der Exzentrizität weitgehend vermeidet. Darüber hinaus zeichnet sich das Exzentergetriebe durch eine sehr hohe Leistungs-/Drehmomentdichte aus. Die Drehmoment-/ Kraftübertragung zwischen dem Ritzel und dem Hohlrad schließt alle Formen des Kraft-, Reib- und Formschlusses mit ein, insbesondere alle bekannten Verzahnungsgeometrien wie zum Beispiel Evolventenverzahnung, Novikov-Wildhaber-Verzahnung, Axiconverzahnung usw..

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand führen.

Es zeigen
- FIG 1, FIG 2: und
- FIG 3: Teile eines Exzentergetriebes aus unterschiedlichen Ansichten,
- FIG 4: eine Systemskizze des Exzentergetriebes gemäß FIG 1 bis 3,
- FIG 5: das Exzentergetriebe in einem Getriebegehäuse,
- FIG 6: eine Draufsicht auf eine Antriebswelle, eine Exzenterscheibe, ein Ritzel und ein Hohlrad des Exzentergetriebes,
- FIG 7: eine Draufsicht gemäß FIG 6 auf eine spezielle Ausführungsform des Exzentergetriebes,
- FIG 8: ein Exzentergetriebe gemäß den vorangehenden Figuren, bei dem eine Motorwelle unmittelbar als Antriebswelle des Exzentergetriebes fungiert, sowie
- FIG 9: ein Exzentergetriebe gemäß den vorangehenden Figuren, bei dem ein Rotor eines Elektromotors als Antriebswelle des Exzentergetriebes fungiert.

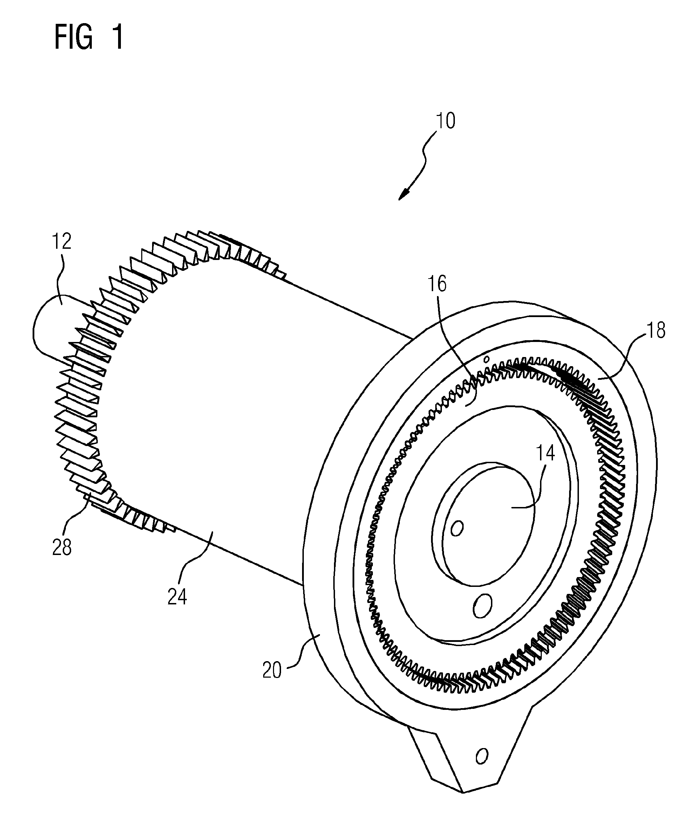

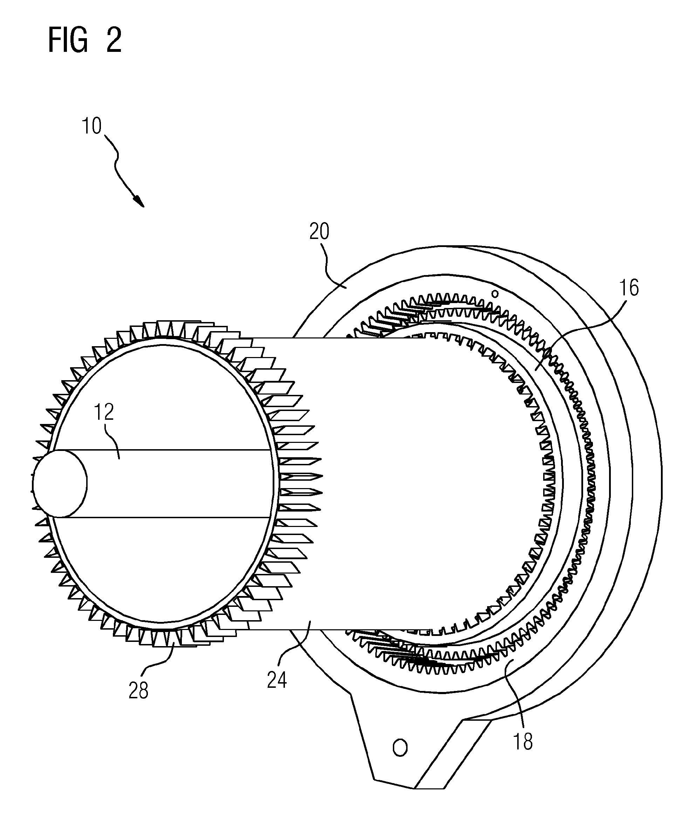

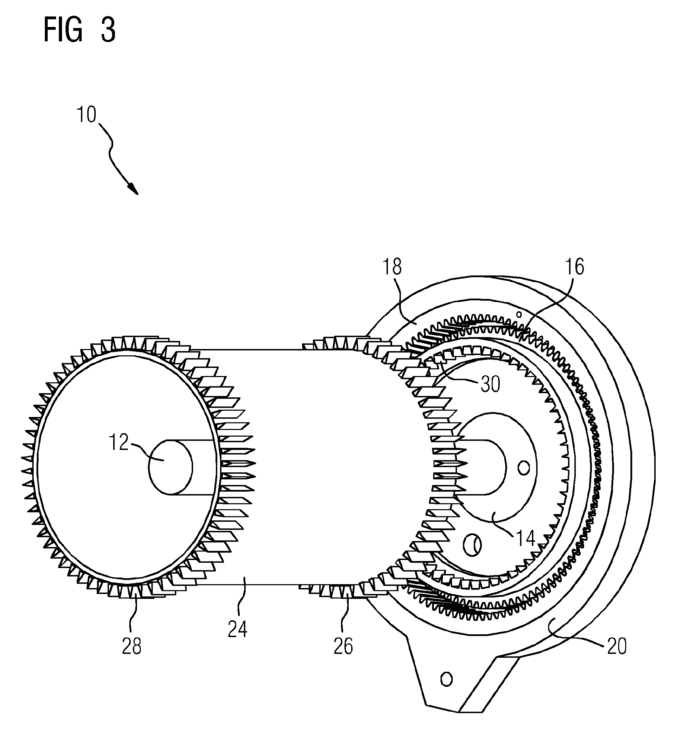

Die Darstellungen in FIG 1 und FIG 2 zeigen die wesentlichen Teile einer Ausführungsform des erfindungsgemäßen Exzentergetriebes 10 aus unterschiedlichen Ansichten, nämlich in FIG 1 mit einem Blick im Wesentlichen auf eine Abtriebsseite und in FIG 2 mit einem Blick im Wesentlichen auf eine Antriebsseite des Exzentergetriebes 10. Die Darstellung in FIG 3 zeigt das Exzentergetriebe 10 aus FIG 1 und FIG 2 in einer Teilexplosionsdarstellung.

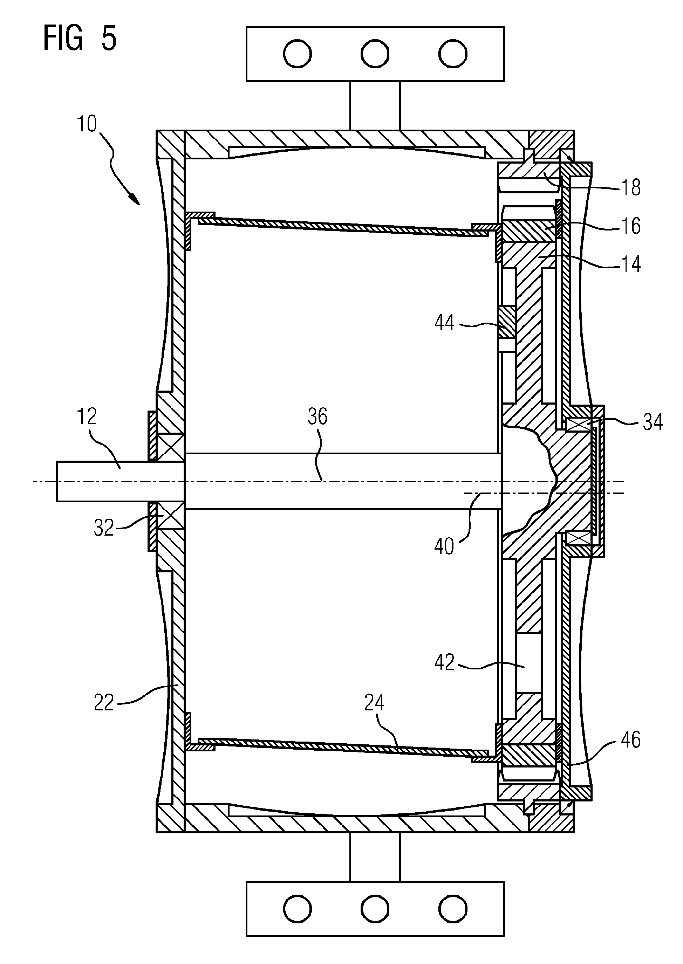

Die nachfolgende Beschreibung erfolgt mit gleichzeitigem Bezug auf die Darstellungen in FIG 1, FIG 2 und FIG 3. Gezeigt ist, dass das Exzentergetriebe 10 eine antriebsseitige Welle 12 (Antriebswelle) aufweist. Mit der Antriebswelle 12 ist drehfest eine aufgrund ihrer zur Mittelachse der Antriebswelle 12 exzentrischen Anordnung als Exzenterscheibe 14 bezeichnete Scheibe verbunden. Auf der Exzenterscheibe 14 ist ein Ritzel 16 gelagert. Das Ritzel 16 ist auf der kreisrunden Außenumfangsfläche der Exzenterscheibe 14 beweglich und diese Beweglichkeit ermöglicht eine Drehbarkeit der Exzenterscheibe 14 relativ zum Ritzel 14. Die Exzenterscheibe 14 ist also innerhalb des Ritzels 16 drehbar. Für eine solche Anbringung kommt jede Form der Lagerung, also zum Beispiel eine Gleit-, Kugel- oder Wälzkörperlagerung, in Betracht. Das Ritzel 16 greift in ein um seine Mittel- und Schwereachse rotierendes Hohlrad 18. Beim dargestellten Ausführungsbeispiel weisen das Ritzel 16 eine Außenverzahnung und das Hohlrad 18 eine Innenverzahnung auf und das Ritzel 16 greift mit seiner Außenverzahnung abschnittsweise in die Innenverzahnung des Hohlrads 18 ein. Für die Verzahnung des Ritzels 16 und des Hohlrads 18 kommt jede bekannte Verzahnung, also insbesondere eine Geradverzahnung, eine Schrägverzahnung, eine Pfeilverzahnung und so weiter, in Betracht. Anstelle einer solchen Verzahnung (Formschluss) sind auch andere Eingriffsarten denkbar, zum Beispiel ein Reibschluss zwischen einem Abschnitt der Außenumfangsfläche des Ritzels 16 und einem Abschnitt der Innenumfangsfläche des Hohlrads 18. Im Interesse einer besseren Lesbarkeit der nachfolgenden Beschreibung - aber ohne Verzicht auf eine weitergehende Allgemeingültigkeit - wird die nachfolgende Beschreibung anhand eines Eingriffs des Ritzels 16 in das Hohlrad 18 aufgrund der gezeigten Verzahnung fortgesetzt. Andere Eingriffsmöglichkeiten, wie zum Beispiel Reibschluss und Kraftschluss, sind dabei stets mitzulesen. Das Hohlrad 18 ist - ebenfalls zum Beispiel mittels Gleit-, Kugel- oder Wälzkörperlagerung - in einem äußeren Lager 20, bei dem es sich zum Beispiel um einen Teil eines selbst nicht gezeigten Getriebegehäuses 22 (siehe FIG 5) handelt, drehbar angeordnet.

Das Hohlrad 18 fungiert als Abtriebsseite des Exzentergetriebes 10 und kann entsprechend auch als Abtriebsrad bezeichnet werden. Am Hohlrad 18 befinden sich folglich normalerweise hier nicht dargestellte Bügel oder dergleichen, die sich in einem Abstand vom Hohlrad 18 in einem auf der Drehachse des Hohlrads 18 liegenden Punkt zum Beispiel zu einer Abtriebsachse vereinigen oder dort eine Anbringung einer Abtriebsachse erlauben.

Eine Drehung der Antriebswelle 12 verursacht eine Drehung der Exzenterscheibe 14 und deren Drehung würde bei einem drehfest mit der Exzenterscheibe 14 verbundenen Ritzel 16 eine exzentrische Drehung des Ritzels 16 im Hohlrad 18 bewirken. Die Besonderheit des hier vorgeschlagenen Exzentergetriebes 10 besteht aber gerade darin, dass das Ritzel 16 nicht drehfest mit der Exzenterscheibe 14 verbunden ist und die Exzenterscheibe 14 vielmehr relativ zum Ritzel 16 drehbar und die Exzenterscheibe 14 innerhalb des Ritzels 16 drehbar gelagert ist. Aufgrund dieser drehbaren Lagerung besteht die Möglichkeit, eine Drehung des Ritzels 16 während einer Drehung der Antriebswelle 12 und der Exzenterscheibe 14 zu hemmen. Das Ergebnis ist, dass das in seiner Rotationsbewegung gehemmte (fixierte oder zumindest im Wesentlichen fixierte) Ritzel 16 mit der Rotation der Exzenterscheibe 14 im Inneren des Hohlrads 18 entlang sich stetig verschiebender Achsen quasi pendelt. Weil das Ritzel 16 in seiner Rotationsbewegung gehemmt ist, resultiert die zykloide "Pendelbewegung" des Ritzels 16 in einer Drehung des Hohlrads 18. Damit ist die Rotation der Antriebswelle 12 auf das als Abtriebsrad fungierende Hohlrad 18 übertragen.

Im Vergleich zu zum Beispiel einem Exzentergetriebe in Form eines an sich bekannten Zykloidgetriebes, wie dieses zum Beispiel aus der DE 10 2004 048 197 A bekannt ist, ist bei dem hier vorgeschlagenen Exzentergetriebe 10 das innere Ritzel 16 in seiner Rotationsbewegung gehemmt und rotiert also nicht, während dagegen das äußere Hohlrad 18 aufgrund der zykloiden Bewegung des Ritzels 16 in Drehung versetzt wird. Bei dem Zykloidgetriebe der DE 10 2004 048 197 A sind die Verhältnisse gerade anders herum. Dort rotiert das dortige innere Exzenterrad in einem drehfesten äußeren Hohlrad.

Bei der gezeigten Ausführungsform fungiert eine Kupplung 24, nämlich eine drehstarre Zahnkupplung, zum Beispiel eine Zahnkupplung, wie sie von der Anmelderin unter der Bezeichnung "Zapex-Kupplung" angeboten wird, als Mittel zur Hemmung der Rotationsbewegung des Ritzels 16. Bei der Kupplung 24 handelt es sich um einen Zylinder mit einer beidseitigen Außenverzahnung 26, 28, wobei grundsätzlich auch eine Innenverzahnung oder eine Außen- und eine Innenverzahnung, zum Beispiel eine Außenverzahnung auf der dem Ritzel 16 zugewandten Seite und eine Innenverzahnung auf der vom Ritzel 16 abgewandten Seite, in Betracht kommt. In den Figuren gezeigt ist eine Ausführungsform des Zylinders mit einer beidseitigen Außenverzahnung 26, 28 und mit der Verzahnung 26, 28 greift die Kupplung 24 in eine entsprechende Gegenverzahnung (Innenverzahnung) 30 des Ritzels 16 ein (siehe FIG 3). Die Gegenverzahnung 30 ist dabei entweder einstückiger Bestandteil des Ritzels 16 oder mit dem Ritzel 16 in geeigneter Art und Weise drehfest verbunden. Die vom Ritzel 16 abgewandte Seite der Kupplung 24 greift mit ihrer dortigen Verzahnung 28 in eine drehfeste (nicht gezeigte) Verzahnung eines Getriebegehäuses 22 oder dergleichen ein.

Die Kupplung 24 ist auf ihrer vom Ritzel 16 abgewandten Seite konzentrisch zur der Antriebswelle 12 angeordnet. Mit ihrer dem Ritzel 16 zugewandten Seite folgt die Kupplung 24 der exzentrischen/zykloiden Bewegung des Ritzels 16. Insgesamt führt die Kupplung 24 damit auf der Seite des Ritzels 16 eine taumelnde Bewegung um die Antriebswelle 12 aus, ohne sich dabei (aufgrund des Eingriffs der Verzahnung 28 in eine entsprechende Gegenverzahnung) selbst zu drehen.

Damit die Kupplung 24 eine solche Bewegung ausführen kann, ist vorteilhaft vorgesehen, dass die Zähne der Verzahnung 26, 28 eine sogenannte ballige Form aufweisen. Eine solche Form der Verzahnung 26, 28 ist in den schematisch vereinfachten Darstellungen in den Figuren 1 bis 3 nicht gezeigt. Eine ballige Zahnform ist jedoch an sich bekannt, so dass eine konkrete Darstellung entbehrlich ist. Die konkrete Geometrie der Balligkeit ist auf den Umfang der Pendelbewegung, also die Exzentrizität der Exzenterscheibe 14, sowie die Länge des Zylinders der Kupplung 24 abgestimmt. Je kürzer also der Zylinder ist und/oder je größer der Umfang der Pendelbewegung ist, umso stärker sind die Zahnflanken gerundet (ballig). Damit bei der Pendelbewegung der Kupplung 24 die Verzahnung 26, 28 nicht außer Eingriff mit der Gegenverzahnung 30 auf Seiten des Ritzels 16 und der Gegenverzahnung auf der dem Ritzel 16 gegenüberliegenden Seite kommt, ist bei einer Ausführungsform des Exzentergetriebes 10 vorgesehen, dass die Zähne der Gegenverzahnung 30 und die Zähne der Gegenverzahnung auf der dem Ritzel 16 gegenüberliegenden Seite länger als die entlang der Längserstreckung der Kupplung 24 gemessene Länge der balligen Zähne der Verzahnung 26, 28 sind.

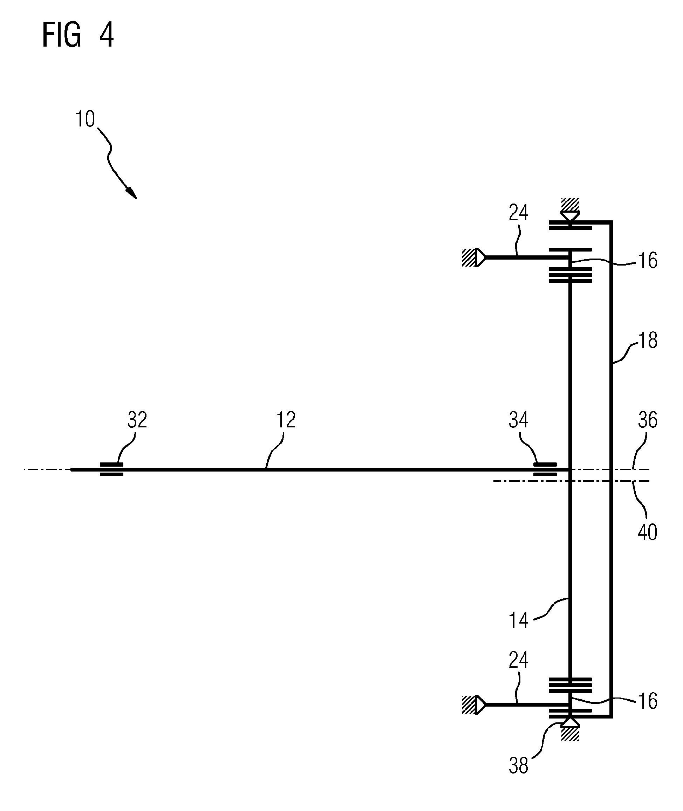

Die Darstellung in FIG 4 zeigt eine Systemskizze des Exzentergetriebes 10 gemäß den vorangehenden Figuren. Gezeigt ist, dass die Antriebswelle 12 in an sich bekannter Art und Weise mittels zumindest eines Lagers 32, 34 drehbar gelagert ist. Das Hohlrad 18 ist symmetrisch zur Drehachse 36 der Antriebswelle 12 angeordnet und mittels äußerer Lager 38 drehbar gelagert. Die drehfest an der Antriebswelle 12 angebrachte Exzenterscheibe 14 ist relativ zur Drehachse 36 der Antriebswelle 12 außermittig angeordnet und mit 40 ist eine Linie durch den geometrischen Mittelpunkt der Exzenterscheibe 14 bezeichnet. Die Exzentrizität entspricht dem Abstand dieser Linie 40 von der Drehachse 36. Man erkennt, dass das zum Beispiel mittels Gleitlagerung drehbar an der Exzenterscheibe 14 gelagerte Ritzel 16 aufgrund der Exzentrizität nur abschnittsweise im Eingriff mit dem Hohlrad 18 ist. Die Kupplung 24 ist auf ihrer dem Ritzel 16 gegenüberliegenden Seite fixiert, zum Beispiel im Wege eines Eingriffs zweier Verzahnungen, wie vorstehend beschrieben. Das Ritzel 16 ist mittels der Kupplung 24 in seiner Rotationsbewegung gehemmt. Die Exzenterscheibe 14 dreht sich gewissermaßen "unter" dem oder in dem in seiner Rotationslage fixierten oder zumindest im Wesentlichen fixierten Ritzel 16 weg und bewirkt dabei die weiter oben bereits erwähnte zykloide Pendelbewegung des Ritzels 16, die im Ergebnis zur einer Rotationsbewegung des Hohlrads 18 führt.

Die Kupplung 24 ist ein Beispiel für Mittel 24 oder ein Mittel 24 zur Hemmung der Rotationsbewegung des Ritzels 16. Andere Beispiele für solche Mittel 24 sind zumindest eine gelenkig am Ritzel 16 sowie an einem drehfesten Teil, zum Beispiel dem Getriebegehäuse 22, angreifende, starre Strebe, zum Beispiel in Form einer Kardanwelle, oder eine Mehrzahl solcher insbesondere gleichmäßig über den Umfang des Ritzels 16 verteilter Streben oder eine elastische Manschette.

Die Darstellung in FIG 5 zeigt eine weitere Systemskizze des Exzentergetriebes 10 mit zusätzlichen Details. Gezeigt ist das Getriebegehäuse 22 mit der dort angreifenden Kupplung 24 bzw. dem dort angreifenden Mittel 24 zur Hemmung der Rotationsbewegung des Ritzels 16. Ebenfalls gezeigt sind Mittel 42, 44 zum Beseitigen oder zumindest Verringern der aufgrund der Exzentrizität der Exzenterscheibe 14 resultierenden Unwucht. Bei den genannten Mitteln 42, 44 handelt es sich zum Beispiel um eine oder mehrere Bohrungen 42 in der Exzenterscheibe 14 oder ein oder mehrere Gewichte 44 an der Exzenterscheibe 14. Das hier zweiteilig gezeigte Hohlrad 18 weist einen äußeren Flansch 46 auf, der als Abtrieb oder als Ort zur Ankopplung einer Abtriebswelle fungiert.

Hinsichtlich der bei der Ausführungsform in FIG 5 gezeigten Anbringung der Kupplung 24 ist darauf hinzuweisen, dass die Darstellung bewusst so allgemein gehalten ist, dass die Darstellung sowohl eine Kupplung 24 mit einer Außenverzahnung 26, 28 wie in den Figuren 1 bis 3 zeigt, die auf der Seite des Ritzels 16 in eine dortige Gegenverzahnung 30 (FIG 3) eingreift und auf der dem Ritzel 16 gegenüberliegenden Seite in einer drehfeste Gegenverzahnung, zum Beispiel eine drehfest am Getriebegehäuse 22 angebrachte Gegenverzahnung eingreift und damit die Hemmung der Rotationsbewegung des Ritzels 16 bewirkt, wie auch eine Kupplung 24, zum Beispiel in Form einer in gewissem Umfang elastischen Manschette, zeigt, die auf einer Seite mit dem Ritzel 16 und auf der anderen Seite mit dem Getriebegehäuse 22 verbunden, zum Beispiel verklebt ist. Die Elastizität der als Kupplung 24 fungierenden Manschette ist dabei so gewählt, dass die Manschette ihre Funktion zur Hemmung der Rotationsbewegung des Ritzels 16 erfüllen und gleichzeitig der oben erwähnten Pendelbewegung aufgrund der Exzentrizität der Exzenterscheibe 14 folgen kann.

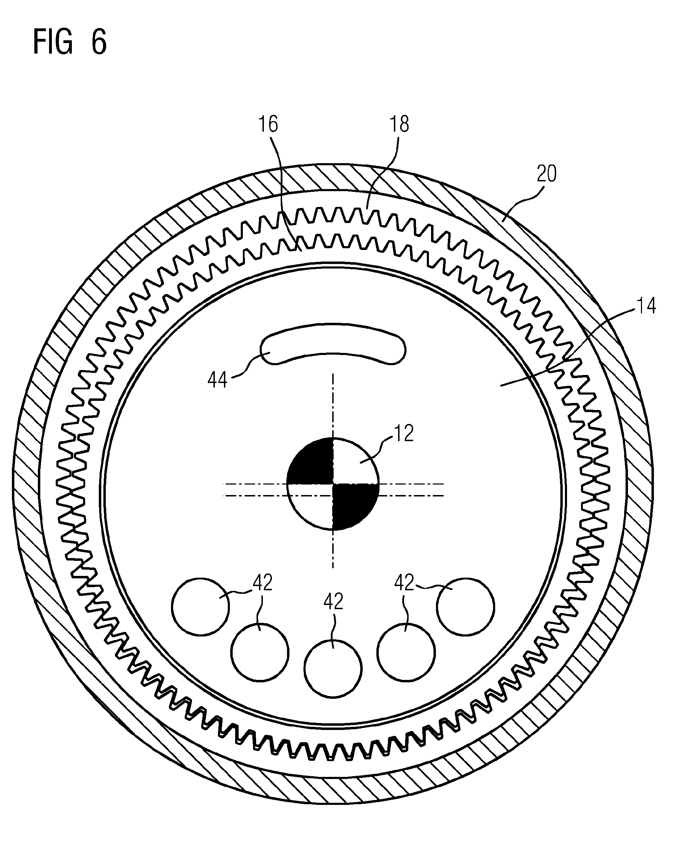

Die Darstellung in FIG 6 zeigt eine Draufsicht auf die Antriebswelle 12, die Exzenterscheibe 14, das Ritzel 16 und das Hohlrad 18. Das Ritzel 16 befindet sich aufgrund der Exzentrizität der Exzenterscheibe 14 - wie bereits mehrfach erwähnt - nur teilweise im Eingriff mit dem Hohlrad 18. Der Eingriff besteht hier, indem die Außenverzahnung des Ritzels 16 in die Innenverzahnung des Hohlrads 18 eingreift. Die mit dem Exzentergetriebe 10 realisierte Übersetzung ergibt sich in an sich bekannter Art und Weise als der Quotient aus der Zahnanzahl des Hohlrads 18 und der Differenz der Zahnanzahlen des Hohlrads 18 und des Ritzels 16. Bei zum Beispiel 91 Zähnen des Hohlrads 18 und 87 Zähnen des Ritzels 16 resultiert entsprechend eine Übersetzung I von 91 / (91 - 87) = 22,75. Durch eine Anpassung der Zahnanzahlen - oder bei einem reibschlüssigen Eingriff des Ritzels 16 in das Hohlrad 18 durch eine Anpassung der Durchmesser - lassen sich andere, für einen jeweiligen Anwendungsfall passendere Übersetzungen realisieren.

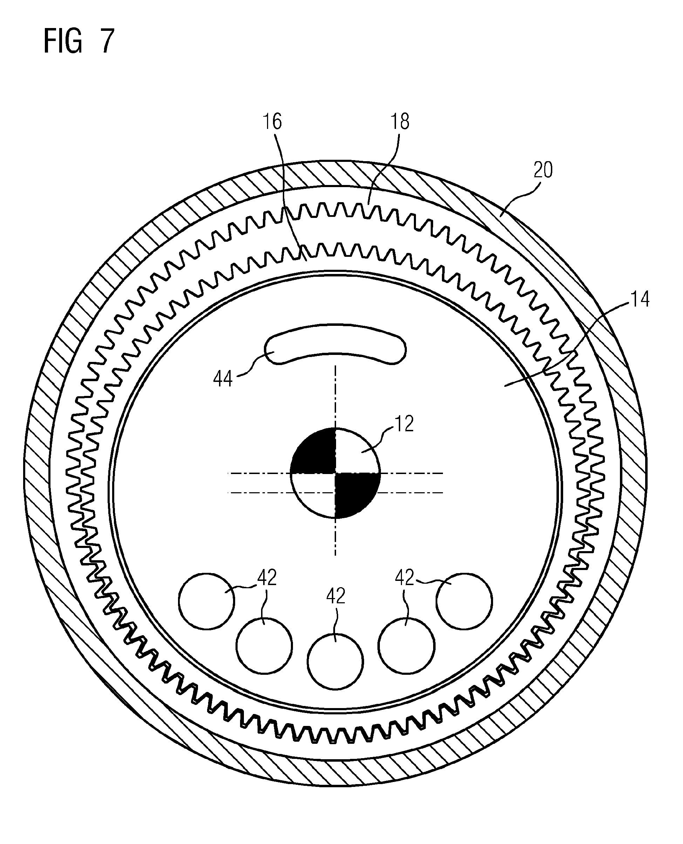

Die Darstellung in FIG 7 zeigt in Form einer Draufsicht gemäß FIG 6 eine spezielle Ausführungsform des Exzentergetriebes 10. Dabei ist vorgesehen, dass die Exzenterscheibe 14 eine von der in den sonstigen Figuren, speziell FIG 6, gezeigten Kreisform abweichende Geometrie aufweist. In FIG 7 ist dies exemplarisch in Form einer elliptischen Exzenterscheibe 14 gezeigt. Andere Außenkonturen der Exzenterscheibe 14 sind ebenfalls denkbar und von dieser Ausführungsform der Erfindung mit umfasst. Jedenfalls resultiert bei einer von der Kreisform abweichenden Geometrie der Exzenterscheibe 14 sowie zusätzlich einem elastisch verformbaren Ritzel 16 eine erhöhte Überdeckung der Verzahnung des Hohlrads 18 durch die Verzahnung des Ritzels 16. Im Ergebnis ist - vergleiche zum Beispiel die Darstellung in FIG 6 - eine erhöhte Anzahl von Zahnflanken des Ritzels 16 mit Zahnflanken der Gegenverzahnung des Hohlrads 18 im Eingriff. Es resultiert eine Erhöhung der Tragfähigkeit und eine Erhöhung des übertragbaren Drehmoments. Die sonstigen vorangehenden und nachfolgenden Erläuterungen, also speziell die Hemmung der Rotationsbewegung des Ritzels 16, gelten auch für die in FIG 7 gezeigte spezielle Ausführungsform des Exzentergetriebes 10.

Die Darstellungen in FIG 6 und FIG 7 zeigen auch mehrere Bohrungen 42 und ein Gewicht (Gegengewicht) 44 als Mittel 42, 44 zum Beseitigen oder zumindest Verringern der aufgrund der Exzentrizität der Exzenterscheibe 14 resultierenden Unwucht. Die oder jede Bohrung 42 führt zu einer lokalen Gewichtsreduktion. Das oder jedes Gewicht 44 führt entsprechend zur einer lokalen Gewichtserhöhung.

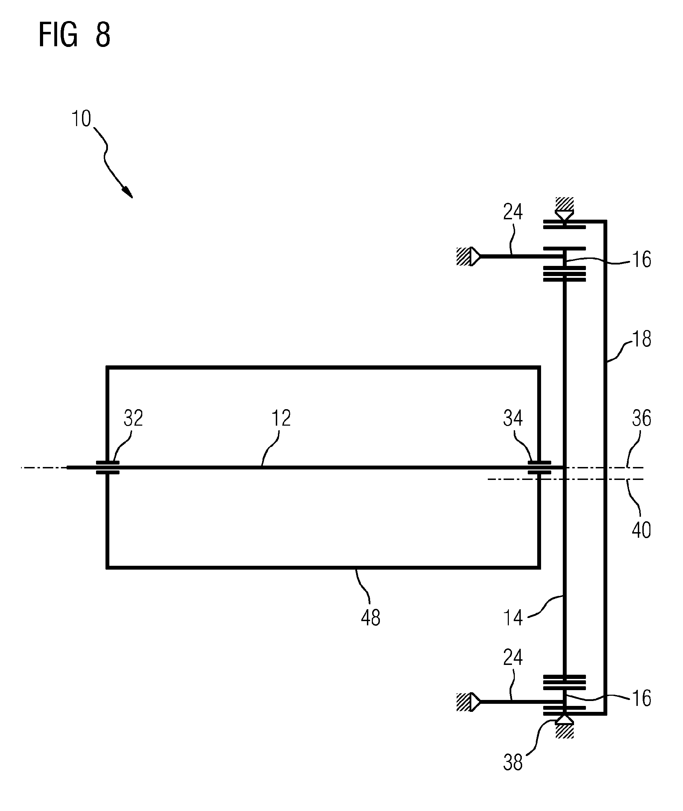

Die Darstellung in FIG 8 ist im Wesentlichen eine Wiederholung der Darstellung in FIG 4, so dass auf die dortigen Ausführungen verwiesen wird. Zusätzlich ist schematisch vereinfacht ein Motor 48, zum Beispiel ein Elektromotor, gezeigt. Die Antriebswelle 12 ist dann die unmittelbar vom Motor 48 in Rotation versetzte Motorwelle und die gesamte Vorrichtung, also die Kombination des Exzentergetriebes 10 zusammen mit dem Motor 48 kann als eigenständige Einheit verbaut werden und ist zu diesem Zwecke zum Beispiel von einem den Motor 48 und das Exzentergetriebe 10 umschließenden, nicht gezeigten Gehäuse umgeben.

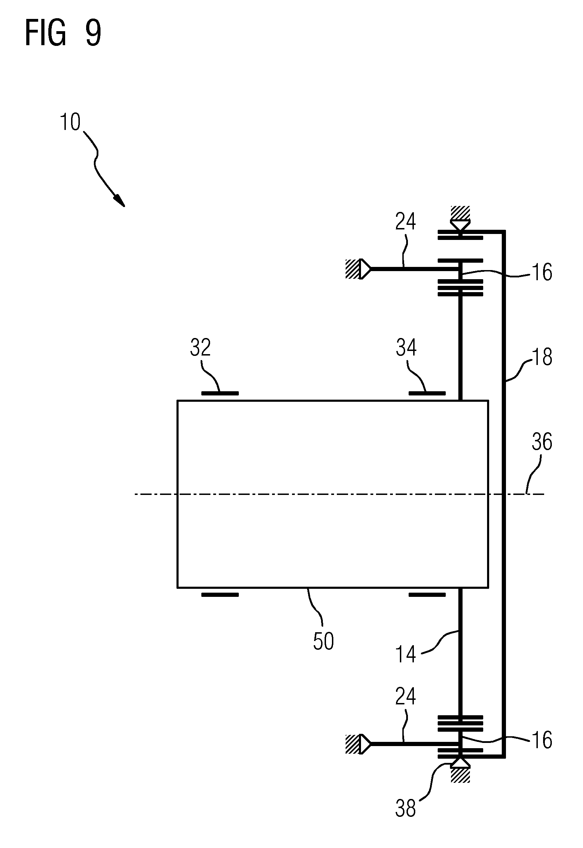

Bei der in FIG 9 gezeigten Ausführungsform besteht die Besonderheit, dass ein in an sich bekannter Art und Weise drehbar gelagerter Rotor 50 eines nicht weiter dargestellten Elektromotors als Antriebswelle 12 (FIG 1; FIG 4) des Exzentergetriebes 10 fungiert. Auf die Außenumfangsfläche des Rotors 50 ist die Exzenterscheibe 14 aufgesetzt oder zum Beispiel am Rotor 50 angeformt und auf der Exzenterscheibe 14 ist ,wie weiter oben beschrieben, das Ritzel 16 gelagert. Auch die restlichen Verhältnisse sind wie zuvor erläutert. Wenn der Elektromotor den Rotor 50 in Rotation versetzt, führt dies zu einer Drehung der Exzenterscheibe 14 und mit dem in seiner Rotationsbewegung gehemmten Ritzel 16 zu einer Drehung des Hohlrads 18 entsprechend der jeweils wirksamen Übersetzung. Auch die in FIG 9 gezeigte Ausführungsform kommt für eine Integration, also eine Zusammenfassung des Elektromotors mit dem als Antriebsachse fungierenden Rotor 50 zusammen mit dem Exzentergetriebe 10 zu einer funktionalen, insbesondere von einem gemeinsamen Gehäuse umgebenen Einheit, in Betracht.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben wird ein Exzentergetriebe 10/ eine Exzenterstufe mit einer Antriebswelle 12, einer mit der Antriebswelle 12 drehfest verbundenen Exzenterscheibe 14, einem relativ zur Exzenterscheibe 14 drehbaren Ritzel 16 und einem äußeren, drehbar gelagerten, abtriebsseitigen Hohlrad 18, wobei das Ritzel 16 je nach Rotationslage der Antriebswelle 12 und der Exzenterscheibe 14 abschnittsweise reib-, kraft- oder formschlüssig in das Hohlrad 18 eingreift und mit Mitteln 24 zur Hemmung einer Rotationsbewegung des Ritzels 16, so dass sich eine Drehung der Antriebswelle 12 auf das abtriebsseitige Hohlrad 18 überträgt und zu einer Drehung des Hohlrads 18 führt. Mit dem hier vorgeschlagenen Exzentergetriebe 10 oder einer entsprechenden Exzenterstufe ist eine Leistungsübertragung im Megawatt-Bereich möglich. Daraus resultiert die besondere Eignung für Schwerlastanwendungen wie Zementmühlen oder dergleichen.

## Patentansprüche

1. Exzentergetriebe (10) mit einer Antriebswelle (12), einer mit der Antriebswelle (12) drehfest verbundenen Exzenterscheibe (14), einem Ritzel (16) und einer relativ zum Ritzel (16) drehbaren Exzenterscheibe (14) sowie einem äußeren, drehbar gelagerten Hohlrad (18), wobei das Ritzel (16) je nach Rotationslage der Antriebswelle (12) und der Exzenterscheibe (14) abschnittsweise in das Hohlrad (18) eingreift und mit Mitteln (24) zur Hemmung einer Rotationsbewegung des Ritzels (16).

2. Exzentergetriebe (10) nach Anspruch 1, wobei die Exzenterscheibe (14) mittels einer Gleit-, Kugel- oder einer Wälzlagerung zwischen einer Außenumfangsfläche der Exzenterscheibe (14) und einer inneren Umfangsfläche des Ritzels (16) relativ zum Ritzel (16) drehbar gelagert ist.

3. Exzentergetriebe (10) nach Anspruch 1 oder 2, wobei die Exzenterscheibe (14) eine von einer Kreisform abweichende Außenkontur aufweist und wobei das Ritzel (16) elastisch verformbar ist.

4. Exzentergetriebe (10) nach einem der vorangehenden Ansprüche, wobei als Mittel (24) zur Hemmung einer Rotationsbewegung des Ritzels (16) eine einseitig mit dem Ritzel (16) verbundene Kupplung (24) fungiert, die auf einer dem Ritzel (16) gegenüberliegenden Seite drehfest gelagert ist.

5. Exzentergetriebe (10) nach Anspruch 4, wobei die Kupplung (24) zur Verbindung mit dem Ritzel (16) eine Verzahnung (26) und das Ritzel (16) eine korrespondierende Gegenverzahnung (30) aufweist.

6. Exzentergetriebe (10) nach Anspruch 4 oder 5, wobei die Kupplung (24) zur drehfesten Lagerung auf der dem Ritzel (16) gegenüberliegenden Seite eine in eine drehfeste, korrespondierende Gegenverzahnung eingreifende Verzahnung (28) aufweist.

7. Exzentergetriebe (10) nach Anspruch 5 und 6, wobei alle Zähne der Verzahnung (26, 28) der Kupplung (24) gleichzeitig mit den Zähnen einer jeweiligen Gegenverzahnung (30) im Eingriff sind.

8. Exzentergetriebe (10) nach Anspruch 5, 6 oder 7, wobei die Verzahnung (26, 28) der Kupplung (24) ballige Zähne aufweist.

9. Exzentergetriebe (10) nach Anspruch 8, wobei die Zähne der Gegenverzahnung (30) und/oder die Zähne der Gegenverzahnung auf der dem Ritzel (16) gegenüberliegenden Seite länger als eine entlang der Längserstreckung der Kupplung (24) gemessene Länge der balligen Zähne der Verzahnung (26, 28) sind.

10. Exzentergetriebe (10) nach einem der vorangehenden Ansprüche, wobei die Exzenterscheibe (14) Mittel (42, 44) zum Beseitigen oder zumindest Verringern einer aufgrund der Exzentrizität der Exzenterscheibe (14) resultierenden Unwucht aufweist.

11. Exzentergetriebe (10) nach einem der vorangehenden Ansprüche, wobei als Antriebswelle (12) ein Rotor (50) eines Elektromotors fungiert und die Exzenterscheibe (14) drehfest mit dem Rotor (50) verbunden ist.

12. Antrieb oder Arbeitsmaschine mit zumindest einem Exzentergetriebe (10) nach einem der vorangehenden Ansprüche.

13. Verwendung eines Exzentergetriebes (10) nach einem der Ansprüche 1 bis 11 in einem Antriebsstrang einer Vertikalmühle, insbesondere einer Zementmühle.
